(19) Europäisches Patentamt / European Patent Office / Office européen des brevets

(11) **EP 3 108 038 B1**

(12) **FASCICULE DE BREVET EUROPEEN**

(45) Date de publication et mention de la délivrance du brevet:
**08.08.2018 Bulletin 2018/32**

(21) Numéro de dépôt: **15704551.9**

(22) Date de dépôt: **16.02.2015**

(51) Int Cl.:
*C25D 5/02* *(2006.01)*    *C25D 17/02* *(2006.01)*
*C25D 17/10* *(2006.01)*    *C25D 17/12* *(2006.01)*
*C25D 21/12* *(2006.01)*    *G01N 21/75* *(2006.01)*
*G01N 21/77* *(2006.01)*    *G01N 21/78* *(2006.01)*

(86) Numéro de dépôt international:
**PCT/EP2015/053181**

(87) Numéro de publication internationale:
**WO 2015/121462 (20.08.2015 Gazette 2015/33)**

(54) **DISPOSITIF ET APPAREIL ÉLECTROCHIMIQUE ET PROCÉDÉS METTANT EN OEUVRE UN TEL APPAREIL**

ELEKTROCHEMISCHE VORRICHTUNG UND -EINRICHTUNG UND VERFAHREN ZUR IMPLEMENTIERUNG SOLCH EINER EINRICHTUNG

ELECTROCHEMICAL DEVICE AND APPARATUS AND METHODS IMPLEMENTING SUCH AN APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2014 FR 1451233**

(43) Date de publication de la demande:
**28.12.2016 Bulletin 2016/52**

(73) Titulaires:
• **Centre National de la Recherche Scientifique**
**75016 Paris (FR)**
• **Universite du Maine**
**72085 Le Mans Cedex 9 (FR)**

(72) Inventeurs:
• **AUSSERRE, Dominique**
**72270 Soulitre (FR)**
• **ABOU KHACHFE, Refahi**
**Saida (LB)**
• **BROTONS, Guillaume**
**72000 Le Mans (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**US-A1- 2011 199 610**

• **H. CACHET ET AL: "In situ Investigation of Crystallization Processes by Coupling of Electrochemical and Optical Measurements: Application to CaCO[sub 3] Deposit", ELECTROCHEMICAL AND SOLID-STATE LETTERS, vol. 4, no. 4, janvier 2001 (2001-01), page C23, XP055182131, ISSN: 1099-0062, DOI: 10.1149/1.1354498**
• **M NOBIAL ET AL: "IN SITU INVESTIGATION OF CRYSTALLIZATION PROCESSES OF ZNO BY COUPLING OF ELECTROCHEMICAL AND OPTICAL MEASUREMENTS", PROCEEDINGS OF THE INTERNATIONAL WORKSHOP "ADVANCED TECHNIQUES FOR ENERGY SOURCES INVESTIGATION AND TESTING", janvier 2004 (2004-01), pages P11-1, XP055182116,**
• **DEVOS O ET AL: "Simultaneous EIS and in situ microscope observation on a partially blocked electrode application to scale electrodeposition", ELECTROCHIMICA ACTA, ELSEVIER SCIENCE PUBLISHERS, BARKING, GB, vol. 51, no. 8-9, 20 janvier 2006 (2006-01-20), pages 1413-1422, XP028027753, ISSN: 0013-4686, DOI: 10.1016/J.ELECTACTA.2005.02.117 [extrait le 2006-01-20]**

- **YELENA GORLIN ET AL: "In Situ X-ray Absorption Spectroscopy Investigation of a Bifunctional Manganese Oxide Catalyst with High Activity for Electrochemical Water Oxidation and Oxygen Reduction", JOURNAL OF THE AMERICAN CHEMICAL SOCIETY, vol. 135, no. 23, 12 juin 2013 (2013-06-12), pages 8525-8534, XP055146679, ISSN: 0002-7863, DOI: 10.1021/ja3104632**

**Description**

L'invention porte sur un dispositif électrochimique, sur un appareil comprenant un tel dispositif et sur l'utilisation d'un tel appareil pour l'étude in situ d'au moins une réaction électrochimique et/ou d'un procédé de dépôt électrochimique.

Les interfaces solide-liquide sont le siège de nombreux types de réactions chimiques et physico-chimiques. En particulier, les interfaces entre des solides conducteurs (notamment des métaux) et des électrolytes sont le siège de réactions électrochimiques qui peuvent présenter des nombreuses applications : génération et stockage d'énergie électrique, réalisation de capteurs chimiques et biochimiques, catalyse, etc.

Ces réactions sont des phénomènes complexes, impliquant plusieurs étapes, particulièrement difficiles à comprendre et à contrôler. En raison de cette complexité, les études menées dans ce domaine considèrent essentiellement le cas de surfaces planaires ; de même, les surfaces planaires sont utilisées de manière prépondérante dans les applications. Avec l'intégration progressive de dispositifs analytiques complexes, la prise en compte du caractère local des phénomènes électrochimiques prend une importance croissante. En outre, l'étude en temps réel de la cinétique de réaction fournit des informations essentielles sur ces mécanismes. Pour ces raisons il existe un besoin croissant d'outils combinant mesures électrochimiques locales et imagerie. Les techniques d'imagerie les plus simples sont de type optique ; malheureusement, il est difficile de les combiner avec des mesures électrochimiques locales. En effet, les réactions électrochimiques se déroulent à la surface d'électrodes, qui sont généralement opaques, en contact avec un électrolyte ; par conséquent, conformément à l'art antérieur, un dispositif d'imagerie optique utilisé pour étudier une telle réaction doit être agencé dans le demi-espace contenant la surface active de l'électrode et l'électrolyte. Mais les mesures électrochimiques locales doivent également être réalisées dans le même demi-espace, par exemple au moyen d'une sonde locale de contact balayant l'électrode ; une telle sonde peut s'interposer entre le dispositif d'imagerie optique et la surface, gênant l'observation de cette dernière.

Même en l'absence de ces contraintes d'encombrement, l'observation d'une surface à travers un électrolyte peut s'avérer difficile. Par ailleurs, les modifications de la surface de l'électrode induites par une réaction électrochimique présentent souvent un faible contraste optique - que l'on pense par exemple aux premiers instants du dépôt d'une couche électrolytique, lorsque ladite couche présente une épaisseur moyenne de l'ordre d'un nanomètre ou moins.

A titre d'exemple, les publications suivantes décrivent un dispositif couplant des mesures électrochimiques et optiques :

- H. Cachet et al. « In situ Investigation of Crystallization Processes by Coupling of Electrochemical and Optical Measurements : Application to CaCO3 Deposit », Electrochemical and Solid-State Letters, vol. 4, 1er janvier 2001 ;
- M. Nobial et al. « In situ Investigation of Crystallization Processes of ZnO by Coupling of Electrochemical and Optical Measurements », Proceedings of the International Workshop « Advances Techniques for Energy Sources Investigation and Testing »,, 1er janvier 2004;
- O. Devos et al. « Simultaneous EIS and in situ microscope observation of a partially blocked electrode. Application to scale electrodeposition », Electrochimica Acta, Elsevier, Vol. 51, no. 8 - 9, 20 janvier 2006.

Ce dispositif comprend une cellule électrochimique présentant, sur l'une de ses parois, une électrode de travail semi-transparente. Une fibre optique permet d'éclairer l'électrode par son côté opposé à la paroi de la cellule électrochimique, et une caméra CCD permet de l'observer, par transparence, à travers ladite paroi.

L'invention vise à surmonter, en tout ou en partie, ces inconvénients de l'art antérieur.

Conformément à l'invention, un tel but est atteint en utilisant une couche mince conductrice déposée sur la face interne d'une paroi transparente d'une cellule électrochimique. Cette couche mince conductrice accomplit une double fonction :

- elle constitue une électrode de travail, à la surface de laquelle se déroule la réaction électrochimique à étudier ;
- elle constitue également une couche amplificatrice de contraste optique, optimisée pour un éclairage et une observation par sa face arrière (opposée à la face en contact avec l'électrolyte contenu dans la cellule électrochimique).

Ainsi l'observation de l'électrode se fait avec un contraste élevé et par sa face arrière, de façon à ne pas être gênée par la présence simultanée d'un moyen de caractérisation électrochimique locale sur la face avant.

L'invention vise également à procurer une nouvelle méthode de fabrication de couches minces structurées, mettant en oeuvre un procédé d'impression photo-électrochimique. Conformément à cet aspect de l'invention, un motif lumineux peut être projeté sur la face arrière d'une couche mince conductrice telle que mentionnée plus haut. Dans des conditions chimiques opportunes (voir par exemple le document WO 2009/037311), un dépôt se produit sélectivement dans les seules régions éclairées (ou, inversement, non éclairées), ou en tout cas avec un taux de croissance du dépôt dépendant de l'intensité lumineuse. On obtient ainsi une couche mince structurée dont la structure reproduit celle du motif optique projeté. La croissance de cette couche peut être suivie en temps réel, et avec un contraste optique élevé, par observation de la face arrière de la couche mince.

Un objet de l'invention est donc un appareil électrochimique comprenant une cellule fluidique présentant un volume interne pouvant être rempli par un fluide ainsi qu'au moins une première et une deuxième électrode en contact avec ledit volume interne dans lequel au moins ladite première électrode comprend une couche mince en matériau conducteur et optiquement absorbant à au moins une longueur d'onde $\lambda$ dans le spectre visible, proche infrarouge ou proche ultraviolet, ladite couche mince étant agencée sur ou dans une surface interne d'une paroi de ladite cellule fluidique au moins partiellement transparente à ladite longueur d'onde $\lambda$, caractérisé en ce qu'il comprend également un dispositif d'imagerie optique par réflexion (MO), agencé pour éclairer ladite couche mince à travers ladite paroi à au moins ladite longueur d'onde $\lambda$, et pour l'observer également à travers ladite paroi ; et en ce que ladite paroi forme, avec ladite couche mince, une fenêtre présentant une transmittance supérieure ou égale à 30% lorsqu'elle est éclairée, à ladite longueur d'onde $\lambda$, par ledit dispositif d'imagerie optique par réflexion.

Selon différents modes de réalisation d'un tel appareil :

- Ladite couche mince peut présenter une épaisseur inférieure ou égale à 150 nm, de préférence inférieure ou égale à 40 nm et de manière encore préférée inférieure ou égale à 20 nm.
- Ladite paroi peut former, avec ladite couche mince, une fenêtre présentant, à ladite longueur d'onde $\lambda$, une transmittance supérieure ou égale à 30%, de préférence supérieure ou égale à 60% et de manière encore préférée supérieure ou égale à 80%.
- Ladite couche mince peut être réalisée en un matériau choisi parmi : un métal ; un semi-conducteur ; le graphène ; le diamant dopé bore ; une couche de nanoparticules ; un oxyde métallique ; un polymère conducteur.
- Ladite couche mince peut être réalisée par implantation - et notamment par implantation ionique - dans ladite paroi.
- Au moins la partie de ladite paroi en contact direct avec ladite couche mince peut être réalisée en matériau conducteur transparent à ladite longueur d'onde $\lambda$.
- Le dispositif peut comprendre une sonde de microscopie à sonde locale dont une pointe conductrice constitue ladite deuxième électrode.
- Alternativement, ladite deuxième électrode peut présenter une surface plane agencée en regard de ladite couche mince parallèlement à cette dernière.
- Ladite paroi portant ladite couche mince peut ête amovible.
- Le dispositif peut comprendre également une troisième électrode, dite de référence, en contact avec ledit volume interne.
- Ledit dispositif d'imagerie optique par réflexion peut comprendre un microscope optique.
- L'appareil peut comprendre également un microscope à sonde locale ayant une sonde locale, agencée pour balayer ladite couche mince, dont une pointe conductrice forme ladite deuxième électrode.
- L'appareil peut comprendre également un potentiostat ou ampérostat connecté auxdites électrodes.
- Ledit volume interne peut contenir un fluide au moins partiellement transparent à ladite longueur d'onde $\lambda$, l'épaisseur $e_1$ de ladite couche mince étant comprise entre la moitié et le double d'une épaisseur correspondant à un premier minimum de réflectivité lorsqu'elle est éclairée à ladite longueur d'onde $\lambda$ à travers ladite paroi.

Ledit dispositif d'imagerie optique par réflexion peut, en outre, être adapté pour éclairer ladite couche mince à au moins une longueur d'onde $\lambda$ minimisant la réflectivité en correspondance dudit premier minimum, avec une tolérance de plus ou moins 10% et de préférence de plus ou moins 5%.

- L'appareil peut comprendre également un dispositif de projection optique agencé pour projeter un motif lumineux sur ladite couche mince à travers ladite paroi.

Encore un autre objet de l'invention est un procédé d'étude in situ d'une réaction électrochimique comprenant les étapes suivantes :

- appliquer une différence de potentiel entre deux électrodes d'un tel appareil électrochimique, un fluide susceptible de provoquer une réaction électrochimique étant contenu dans ledit volume interne, moyennant quoi une dite réaction électrochimique se déroule à la surface de ladite première électrode ; et
- éclairer et observer ladite première électrode à travers ladite paroi au moyen dudit dispositif d'imagerie optique.

Encore un autre objet de l'invention est un procédé d'impression électrochimique comprenant les étapes suivantes :

- appliquer une différence de potentiel entre ladite première et ladite deuxième électrode d'un tel appareil électrochimique, un fluide susceptible de provoquer une réaction de dépôt photo-électrochimique étant contenu dans ledit volume interne ;

- simultanément, projeter un motif lumineux sur ladite couche mince à travers ladite paroi au moyen dudit dispositif de projection optique moyennant quoi une réaction de dépôt photo-électrochimique se déroule à la surface de ladite première électrode, contrôlée par l'éclairage local de ladite surface par ledit motif lumineux ; et
- observer ladite première électrode à travers ladite paroi au moyen dudit dispositif d'imagerie optique.

Avantageusement, ledit dispositif de projection optique peut être utilisé pour projeter sur ladite couche mince un motif lumineux correspondant à une première longueur d'onde ou à un premier ensemble de longueurs d'onde et ledit dispositif d'imagerie optique peut être utilisé pour éclairer ladite couche mince à au moins à ladite longueur d'onde λ, différente de ladite première longueur d'onde ou n'appartenant pas audit premier ensemble de longueurs d'onde.

D'autres caractéristiques, détails et avantages de l'invention ressortiront à la lecture de la description faite en référence aux dessins annexés donnés à titre d'exemple et qui représentent, respectivement :

- la figure 1, le contraste avec lequel est observé un échantillon déposé sur une couche absorbante amplificatrice de contraste à différentes longueurs d'onde ;
- la figure 2A, un dispositif et un appareil selon un mode de réalisation de l'invention ;
- la figure 2B une vue de détail d'une cellule fluidique d'un dispositif selon un autre mode de réalisation de l'invention ; et
- les figures 3A et 3B deux modes de réalisation possibles d'une couche absorbante amplificatrice de contraste.

L'utilisation de couches antireflet (ou couches « λ/4 ») pour augmenter le contraste optique d'un objet observé en microscopie optique par réflexion est une technique connue depuis de nombreuses années et très puissante ; elle a permis notamment la première observation de marches moléculaires par Langmuir et Blodgett en 1937 et, plus récemment, la visualisation des couches de graphène par Novoselov et al.

Soit $I$ l'intensité lumineuse réfléchie par l'objet à observer, déposé sur un support, et $I_s$ celle réfléchie par le support seul ; alors, le contraste avec lequel l'échantillon est observé vaut $C=(I-I_s)/(I+I_s)$. On comprend que la valeur absolue de ce contraste prend sa valeur maximale (égale à 1) quand $I_s=0$, c'est-à-dire quand le support a une réflectivité nulle, ou bien quand l'objet supporté à une réflectivité nulle. Dans le cas le plus simple, la condition $I_s=0$ est satisfaite en utilisant en tant que support un substrat transparent sur lequel est déposée une couche mince, également transparente, dont l'épaisseur et l'indice de réfraction sont choisis de manière opportune. Dans le cas d'une couche antireflet unique, éclairée en incidence normale avec un milieu incident (dont provient l'éclairage) et un milieu émergent (le substrat) transparents et semi-infinis, on obtient les conditions suivantes :

$$n_1{}^2 = n_0 n_3 \qquad\qquad (1a)$$

$$n_1 e_1 = \lambda/4 \qquad\qquad (1b)$$

où $n_1$ est l'indice de réfraction (réel) de la couche, $n_0$ et $n_3$ les indices de réfraction (également réels) des milieux incident et émergent, $e_1$ l'épaisseur de la couche et λ la longueur d'onde d'éclairage.

Certains auteurs ont également envisagé l'utilisation de matériaux absorbants pour la réalisation de couches antireflets ou amplificatrices de contraste.

Par exemple

- L'article de S. G. Moiseev et S. V. Vinogradov « Design of Antireflection Composite Coating Based on Metal Nanoparticle », Physics of Wave Phenomena, 2011, Vol 10, N°1, pages 47 - 51 étudie les conditions que doit satisfaire une couche mince faiblement absorbante déposée sur un substrat transparent pour annuler la réflexion en incidence normale à l'interface air-substrat, l'éclairage étant effectué par l'air. Ce document décrit également une couche mince absorbante en matériau composite contenant des nanoparticules métalliques satisfaisant de manière approchée à ces conditions. Cette étude est fondée sur une étude analytique limitée aux matériaux à très faible absorption et difficilement généralisable.
- Les articles suivants :
- M. A. Kats et al. « Nanometre optical coatings based on strong interference effects in higly absorbing média », Nature Materials, Vol. 12, Janvier 2013, pages 20 - 24; et
- R. M. A. Azzam et al. « Antieflection of an absorbing substrate by an absorbing thin film at normal incidence », Applied Optics, Vol. 26, No 4, pages 719 - 722 (1987)

divulguent des couches antireflet absorbantes déposées sur des substrats qui sont à leur tour absorbants. Là encore, seuls des cas particuliers sont décrits, qui sont difficilement généralisables.

- Le document US 5,216,542 divulgue un revêtement antireflet pour un substrat en verre comportant, sur une face avant du substrat (destinée à être éclairé), une structure multicouches comprenant des couches transparentes et des couches absorbantes en $TiN_x$ et, sur une face arrière dudit substrat, un couche absorbante unique en $TiN_x$ dont l'épaisseur est de nature à assurer une réflectivité faible.

Une idée à la base de la présente invention consiste à réaliser une couche antireflet absorbante et conductrice (sachant que la plupart des matériaux conducteurs absorbent la lumière, la réciproque n'étant pas vraie), déposée sur un substrat transparent et dimensionnée pour servir de couche amplificatrice de contraste lorsqu'elle est utilisée dans une configuration « inversée » ou « face arrière », c'est-à-dire avec éclairage et observation à travers ledit substrat, ce dernier ayant un indice de réfraction supérieur à celui du milieu émergent (ou « milieu ambiant »).

Une autre idée à la base de la présente invention consiste à utiliser une telle couche antireflet absorbante et conductrice en tant qu'électrode de travail d'une cellule électrochimique, dont ledit substrat transparent forme une paroi. Les modifications de la couche antireflet absorbante et conductrice induites par les réactions électrochimiques qui se déroulent à sa surface induisent des modifications importantes de sa réflectivité lorsqu'elle est éclairée et observée à travers le substrat, ce qui permet de suivre le déroulement desdites réactions à l'aide d'un appareil optique tel qu'un microscope.

Etant donné que l'observation de la couche conductrice servant d'électrode de travail se fait par sa face arrière (en contact avec la paroi transparente), des techniques d'imagerie électrochimique utilisant une sonde locale conductrice (Microscopie Electrochimique à Balayage, ou SECM de l'anglais « Scanning ElectroChemical Microscopy » ; Mircoscopie à Balayage à Effet Tunnel Electrochimique, ou ECSTM de l'anglais « ElectroChemical Scanning Tunnel Microscopy » ; etc.) peuvent être mises en oeuvre simultanément sans perturber ladite observation.

On considère une couche en matériau absorbant d'épaisseur $e_1$ ayant une constante diélectrique complexe $\varepsilon_1 = \varepsilon_1' - j\varepsilon_1''$ comprise entre deux milieux semi-infinis transparents, appelés « milieu incident » et « milieu émergent », ayant des constantes diélectriques réelles $\varepsilon_0$ et $\varepsilon_2$ respectivement. Une onde lumineuse plane de longueur d'onde $\lambda$ est incidente sur la couche en provenant du milieu incident. On considère que cette longueur d'onde $\lambda$ appartient au spectre visible (390 nm - 750 nm), proche infrarouge (750 - 3000 nm) ou proche ultraviolet (300 - 390 nm). Les valeurs de constante diélectrique s'entendent à la longueur d'onde $\lambda$. Aucun matériau réel n'est parfaitement transparent, par conséquent toute constante diélectrique a une composante imaginaire non nulle ; toutefois on considère de manière conventionnelle qu'une constante diélectrique est « réelle », correspondant à un matériau « transparent », lorsque la partie imaginaire de son indice de réfraction à cette longueur d'onde est inférieure à $10^{-4}$, voire à $10^{-6}$. On rappelle que, en considérant des matériaux non magnétiques, l'indice de réfraction - éventuellement complexe - est donné par la racine carrée de la constante diélectrique.

Avantageusement, la partie imaginaire $\varepsilon_1''$ de la constante diélectrique de la couche mince absorbante peut être supérieure ou égale à $10^{-4}$, voire à $10^{-3}$, voire à $10^{-2}$.

Dans ces conditions on trouve que la réflexion de l'onde électromagnétique plane s'annule lorsque :

$$\varepsilon_1' = \sqrt{\varepsilon_0 \varepsilon_2} \qquad (2)$$

et

$$e_1 = \frac{\lambda}{2\pi} \frac{\left(\sqrt{\varepsilon_0} - \sqrt{\varepsilon_2}\right)}{\varepsilon_1''} \qquad (3)$$

L'équation (2) se réduit à la condition bien connue $n_1^2 = n_0 n_2$, valable pour les couches antireflets transparentes, lorsque $\varepsilon''$ tend vers 0 et dans le cas de matériaux non magnétiques.

Une simple inspection de l'équation (3) permet de remarquer des points très importants :

- Premièrement le fait que l'indice de réfraction $n_0 = \sqrt{\varepsilon_0}$ du milieu incident doit être supérieur à celui $n_2 = \sqrt{\varepsilon_2}$, autrement l'épaisseur $e_1$ serait négative. L'absorbance de la couche mince introduit donc une asymétrie dans le système.

- Deuxièmement, dans le cas d'un matériau fortement absorbant tel qu'un métal, l'épaisseur $e_1$ est très faible, de l'ordre du nanomètre. Cela n'est pas surprenant car la suppression de la réflexion résulte d'une interférence destructive entre les amplitudes de lumière réfléchies par les faces avant et arrière de la couche mince ; si cette dernière était trop épaisse, la lumière incidente sur une face serait complètement absorbée avant d'atteindre la face opposée, et cet effet interférentiel ne pourrait pas se produire.

Il est difficile de trouver un matériau satisfaisant la condition (2) car normalement $\varepsilon_1$' est négatif. Toutefois, même si cette condition n'est pas satisfaite, la réflectivité est minimisée lorsque la condition (3) l'est. Un choix opportun de la longueur d'onde pourra éventuellement permettre d'approcher la condition (2).

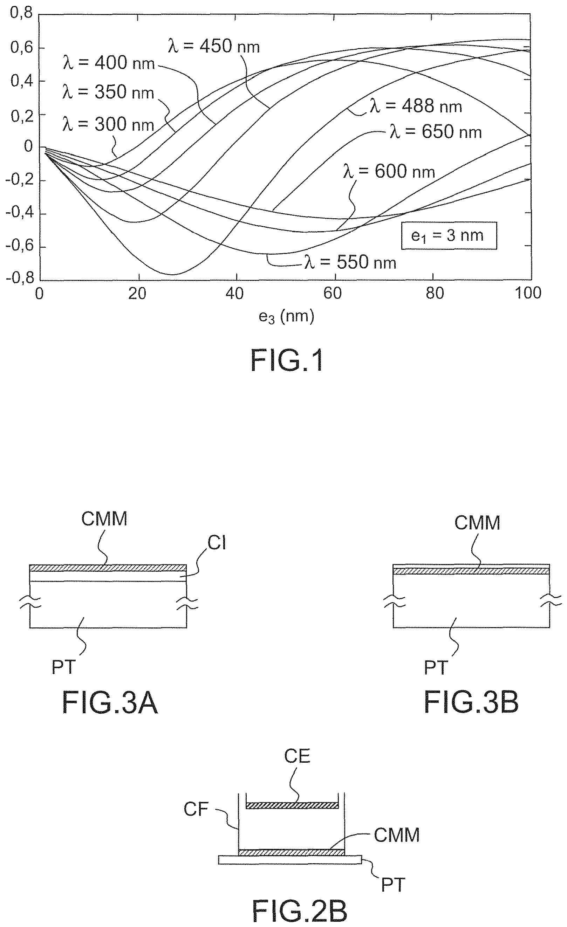

A titre d'exemple on considère le cas d'une couche d'or déposée sur un substrat (milieu incident) en verre et en contact avec un milieu aqueux (milieu émergent), l'ensemble étant éclairée à une longueur d'onde $\lambda$ à travers le milieu incident. Pour $\lambda$=488 nm on a a $\varepsilon_0$= 2,31, $\varepsilon_1$'=-1,8, $\varepsilon_1$"=4,32, $\varepsilon_2$=1,77. On choisit une épaisseur $e_1$=3 nm, ce qui est raisonnablement proche de la valeur idéale - 2,5 nm - calculée à l'aide de l'équation (3) pour $\lambda$=488 nm. Ensuite, on dépose sur la couche mince en or un objet constitué par un petit disque en matériau diélectrique avec un indice de réfraction $n_3$=1,46 ($\varepsilon_3$=1,208). La figure 1 montre le contraste avec lequel cet objet est observé, en fonction de son épaisseur $e_3$, et pour plusieurs longueurs d'onde d'éclairage : 300 nm, 350 nm, 400 nm, 450 nm, 488 nm, 550 nm, 600 nm, 650 nm. On peut vérifier que, dans le cas $\lambda$=488 nm, pour des épaisseurs $e_3$ inférieures à 20 nm le contraste est négatif (objet sombre sur fond clair) et sa valeur absolue croit d'environ 4% pour chaque nanomètre additionnel d'épaisseur. Etant donné qu'un contraste d'une part sur 10.000 (0,01%) reste facilement observable, on comprend que la couche antireflet absorbante permet d'observer des objets d'épaisseur moyenne inférieure à 10 pm (un tel «objet» est constitué de molécules éparses sur la surface de la couche antireflet absorbante). La figure 1 montre que la longueur d'onde $\lambda$=488 nm optimise le contraste, mais l'observation est possible, avec un contraste satisfaisant, à d'autres longueurs d'onde.

Si le milieu incident ou le milieu émergent sont des milieux composites (par exemple si le milieu incident est une structure multicouches), les constantes diélectriques $\varepsilon_0$ et $\varepsilon_2$ peuvent être des constantes diélectriques effectives. Si le milieu incident et/ou le milieu émergent sont partiellement absorbants il faut remplacer $\varepsilon_0$ et $\varepsilon_2$ par les parties réelles de leurs constantes diélectriques complexes. Si l'on considère des matériaux magnétiques, il faut considérer les indices de réfraction au lieu des constantes diélectriques.

D'une manière générale, une couche très mince d'un matériau absorbant forme une couche antireflet lorsqu'elle est déposée sur un substrat transparent ou semi-transparent, éclairée à travers ce substrat et mise en contact avec un milieu émergent transparent, semi-transparent ou même turbide. Une telle couche peut annuler la réflexion ou présenter un minimum de réflectivité non nul. En tout cas, elle permet la formation d'images optiques à contraste élevé d'objets pouvant être très minces et transparents, tels que des couches moléculaires (on parle d'une « couche amplificatrice de contraste »). En pratique, pour une longueur d'onde d'éclairage et des milieux incident et émergent donnés, on pourra déterminer - au moyen d'un modèle analytique ou d'un calcul numérique - le premier minimum de réflectivité (c'est-à-dire à la plus faible épaisseur minimisant la réflectivité). L'épaisseur de la couche pourra coïncider avec ce minimum, ou s'en écarter volontairement comme cela sera expliqué plus loin. Plus avantageusement, on pourra minimiser la réflectivité par rapport à l'épaisseur $e_1$ et à la longueur d'onde $\lambda$, ce qui peut être obtenu par des techniques numériques bien connues. Alternativement, on pourra se baser sur l'équation (2) en choisissant la longueur d'onde d'éclairage $\lambda$ qui minimise $\left(\varepsilon_1' - \sqrt{\varepsilon_0 \varepsilon_2}\right)^2$, puis appliquer l'équation (3) pour déterminer $e_1$.

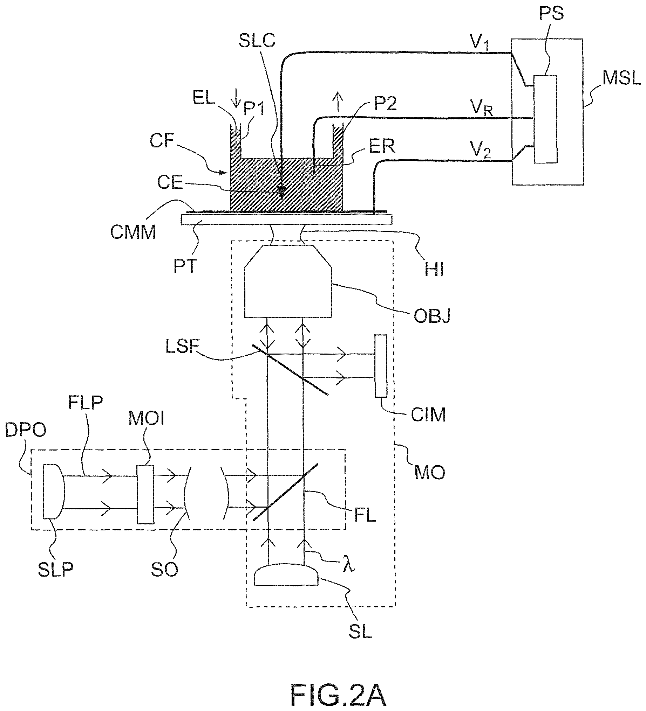

Lorsqu'une telle couche mince est réalisée en matériau conducteur, tel qu'un métal, une telle configuration s'avère très bien adaptée à des applications électrochimiques, comme cela sera expliqué à l'aide de la figure 2A.

Cette figure, qui n'est pas à l'échelle, illustre un dispositif et un appareil selon un mode de réalisation de l'invention. Le dispositif comprend une cellule fluidique, éventuellement microfluidique, CF, avec deux ports P1, P2 permettant l'introduction et l'évacuation - éventuellement en continu, sous la forme d'une circulation - d'un fluide EL, qui peut notamment être un électrolyte. Dans la suite on considérera le cas où le fluide EL est un liquide transparent ; il peut cependant s'agir d'un liquide partiellement absorbant, voire turbide ou même d'un gaz. La cellule CF peut être complètement fermée ou partiellement ouverte, par exemple en sa partie supérieure.

Le fond de la cellule est formé par une paroi transparente PT, typiquement en verre, sur la face intérieure (c'est-à-dire en contact avec le liquide) de laquelle est déposée une couche mince métallique CMM. La paroi PT peut également être semi-transparente ; avantageusement, cette paroi et la couche mince CMM forment une fenêtre de transmittance supérieure ou égale à 30%, de préférence supérieure ou égale à 60% et de manière encore préférée supérieure ou égale à 80%.

Avantageusement, la paroi PT et la couche mince CMM peuvent constituer ou faire partie d'un ensemble amovible, destiné à être remplacé après avoir servi à l'étude d'une réaction électrochimique ou après une opération d'impression photo-électrochimique. Il s'agit alors d'un « consommable » de l'appareil de la figure 2A.

La paroi PT présente de préférence une épaisseur inférieure ou égale à 1 mm, voire à 250 $\mu$m.

L'épaisseur de la couche CMM est choisie, en fonction des indices de réfraction du fluide EL et de la paroi PT de manière à réduire la réflectivité de la fenêtre par rapport au cas où elle serait absente. Par exemple, l'équation (3) peut être satisfaite au moins de manière approchée et pour une longueur d'onde λ dans le spectre visible, proche infrarouge ou proche ultraviolet. Dans ce cas, quel que soit le fluide EL, on aura :

$$e_1 \leq \frac{\lambda}{2\pi} \frac{\sqrt{\varepsilon_0}}{\varepsilon_1''}$$

correspondant au cas limite $\varepsilon_2$=0. En outre, dans ce cas, l'indice de réfraction de la paroi PT doit être supérieur à celui du fluide EL. La couche mince métallique CMM constitue l'électrode de travail d'une cellule électrochimique formée à l'intérieur de la cellule fluidique CF ; cette cellule électrochimique comprend au moins une deuxième électrode (contre-électrode) et de préférence une troisième électrode (électrode de référence). Dans le mode de réalisation de la figure 2A, la contre-électrode CE est constituée par la pointe conductrice d'une sonde locale SLC d'un microscope à sonde locale MSL - tel qu'un microscope à force atomique ou à effet tunnel - balayant la surface de la couche CMM, selon les principes de la microscopie électrochimique à balayage. En variante (figure 2B) il pourrait s'agir d'une électrode planaire, fixée par exemple à une paroi supérieure de la cellule fluidique, en regard de l'électrode de travail CMM. L'électrode de référence ER a, dans ce mode de réalisation, la forme d'une aiguille immergée dans le fluide EL ; dans d'autres modes de réalisation il pourrait s'agir, par exemple, d'une pastille intégrée à la paroi PT mais isolée de l'électrode CMM. Le microscope à sonde locale MSL déplace la sonde SLC sur la surface de la couche CMM ; un potentiostat PS (qui, dans le mode de réalisation de la figure 2, est intégré au microscope MSL) ou un ampérostat maintient ladite sonde à un potentiel $V_1$, ladite couche à un potentiel $V_2$ et l'électrode de référence à un potentiel $V_R$ et mesure le courant circulant entre ladite sonde et ladite couche. Typiquement, de manière connue en soi, on fixe le potentiel de l'électrode de référence ER et de la contre-électrode CE et on mesure le courant entre ladite contre-électrode et l'électrode de travail CMM, mais d'autres façons de procéder sont envisageables.

Un dispositif d'imagerie optique par réflexion tel qu'un microscope optique MO est agencé sur la face extérieure de la paroi transparente PT pour acquérir une image optique des réactions électrochimiques se déroulant sur la couche métallique CMM servant d'électrode de travail. En effet ces réactions altèrent ladite couche, ou la composition de l'électrolyte EL à son voisinage, que ce soit par corrosion, par dépôt électrochimique ou par d'autres réactions d'oxydoréduction ; ces altérations, même minimes, sont visualisées avec un contraste élevé grâce aux propriétés optiques de la couche CMM, discutées plus haut. A ce propos, il peut être intéressant de choisir une épaisseur de la couche CMM s'écartant volontairement du minimum de réflectivité de manière à avoir une variation quasi-linéaire de la réflectivité avec l'épaisseur. Par exemple, l'épaisseur de la couche peut correspondre avec l'épaisseur « nominale » minimisant la réflectivité avec une tolérance de ±10% voire ±30%, voire ±50%, ou même être comprise entre la moitié et le double de cette épaisseur nominale.

Dans l'exemple de la figure 2A, le microscope MO comprend une source de lumière SL générant un faisceau lumineux FL, un objectif OBJ focalisant ce faisceau sur la face arrière de la couche CMM et recueillant la lumière rétrodiffusée par cette dernière, un séparateur de faisceau LSF pour séparer la lumière dirigée vers la couche CMM et celle en provenant et un capteur d'image CIM. La lumière du faisceau FL peut être monochromatique ou polychromatique, spatialement cohérente ou incohérente, polarisée ou non polarisée.

La couche CMM peut éventuellement être fonctionnalisée, par exemple pour réaliser un capteur électrochimique, tel qu'un capteur de glucose. Dans ce cas, il conviendra de tenir compte de la présence d'une couche de fonctionnalisation lors du dimensionnement de l'épaisseur de la couche CMM et éventuellement de la longueur d'onde d'éclairage et observation λ ce qui, comme cela a été indiqué plus haut, pourra se faire de manière numérique à l'aide de la théorie générale des couches minces optiques.

L'appareil de la figure 2A peut être utilisé pour l'étude in-situ d'une réaction électrochimique. Par exemple, il peut permettre de corréler les courants électriques circulant dans les électrodes dans les conditions de tension appliquées et les modifications massiques de la couche CMM ou de son voisinage estimées à partir des observations optiques par réflexion. Cela permet notamment de contrôler la qualité ou l'avancement d'un processus électrochimique, par exemple de traitement de surface, de gravure, de dépôt, etc. et/ou d'en mesurer la cinétique. Il est également possible d'asservir un tel processus en modifiant les valeurs de tension des électrodes en fonction de l'observation optique.

Des couches intermédiaires peuvent être présentes entre la paroi PT et la couche mince métallique CMM. Par exemple, comme illustré sur la figure 3A, qui n'est pas à l'échelle, on peut prévoir une couche intermédiaire CI relativement épaisse (de l'ordre de 200 nm, par exemple) en matériau conducteur transparent, permettant d'uniformiser la tension électrique de la couche CMM ; en effet, en raison de sa faible épaisseur, cette dernière présente une résistance électrique par unité de surface assez élevée, conduisant à une tension non uniforme lorsqu'elle est parcourue par un courant. Là encore, il faudra tenir compte de la présence éventuelle d'une ou plusieurs couches intermédiaires lors du dimensionnement de la couche mince métallique CMM.

La figure 3B illustre une autre variante de réalisation de l'invention, dans laquelle la couche CMM est implantée (par exemple par implantation ionique) dans la paroi PT, et se trouve dès lors quelques nanomètres au-dessous de la surface de cette dernière. On peut combiner les modes de réalisation des figures 3A et 3B, en implantant une couche absorbante et conductrice dans une couche plus épaisse en matériau conducteur transparent déposée sur une paroi par exemple en verre.

Jusqu'à présent on a considéré uniquement le cas d'une couche CMM métallique. Cette contrainte peut toutefois être relâchée, et le métal être remplacé par tout autre conducteur absorbant convenant aux applications électrochimiques, par exemple le graphène ou un semi-conducteur fortement dopé (dégénéré), notamment le diamant dopé bore. Ce dernier matériau, en particulier, présente des propriétés intéressantes d'inertie chimique, dureté et conductivité, ainsi qu'un très bon état de surface. Il peut également s'agir d'une couche de nanoparticules, d'une couche d'un oxyde métallique ou en un polymère conducteur.

Le microscope optique MO peut être d'un type différent de celui illustré sur la figure 2A. Par exemple, il peut comprendre un polariseur et un analyseur croisés, ou plus généralement orientables, pour une observation en lumière polarisée. Il peut également s'agir d'un microscope à contraste interférentiel différentiel comportant deux prismes de Wollaston ainsi qu'un polariseur et un analyseur croisés.

L'appareil de la figure 2A comprend également un dispositif de projection optique DPO agencé pour projeter un motif lumineux sur ladite couche mince à travers ladite paroi. Ce dispositif comprend une deuxième source lumineuse SLP pour générer un faisceau lumineux de projection, un masque ou modulateur d'intensité optique MOI agencé sur le trajet dudit faisceau lumineux de projection pour définir ledit motif lumineux et un système optique SO formant avec l'objectif OBJ un système afocal. Un deuxième séparateur de faisceau LSFP permet de superposer le faisceau lumineux de projection au faisceau lumineux d'éclairage FL en amont de l'objectif OBJ.

Avantageusement, le faisceau lumineux de projection a une longueur d'onde (ou des longueurs d'onde) différente(s) de celle(s) utilisée(s) pour l'observation de la couche. Il n'est pas important que la condition de réduction de la réflectivité soit satisfaite pour la ou les longueurs d'onde utilisées pour la projection du motif lumineux.

Comme expliqué plus haut, l'éclairage par le motif lumineux permet de moduler spatialement la réactivité électrochimique de la surface de l'électrode CMM. Cela peut être exploité pour créer des couches minces structurées, absorbées ou greffées de façon covalente sur ladite électrode, la paroi PT servant de substrat. Pour ce faire on peut utiliser une contre-électrode plane et parallèle à la couche CMM (voir la figure 2B) ou, au contraire, une pointe balayant ladite couche. Dans ce deuxième cas, la structuration est obtenue à la fois électriquement et optiquement.

La couche structurée rapportée sur la surface de l'électrode CMM peut présenter des propriétés chimiques, électriques et/ou optiques différentes de celles de ladite électrode. Par la répétition d'étapes de croissance électrochimique contrôlée optiquement on peut construire des structures tridimensionnelles par étages, par exemple assurant des fonctions électroniques pour des applications microélectroniques.

L'observation simultanée à travers la paroi, au moyen du microscope MO, permet d'assurer le suivi de ce processus, voire son asservissement.

## Revendications

1. Appareil électrochimique comprenant une cellule fluidique (CF) présentant un volume interne pouvant être rempli par un fluide (EL) ainsi qu'au moins une première (CMM) et une deuxième (CE) électrode en contact avec ledit volume interne, dans lequel au moins ladite première électrode comprend une couche mince en matériau conducteur et optiquement absorbant à au moins une longueur d'onde $\lambda$ dans le spectre visible, proche infrarouge ou proche ultraviolet, ladite couche mince étant agencée sur ou dans une surface interne d'une paroi (PT) de ladite cellule fluidique au moins partiellement transparente à ladite longueur d'onde $\lambda$,, **caractérisé en ce qu'**il comprend également un dispositif d'imagerie optique par réflexion (MO), agencé pour éclairer ladite couche mince à travers ladite paroi à au moins ladite longueur d'onde $\lambda$, et pour l'observer également à travers ladite paroi ; et **en ce que** ladite paroi forme, avec ladite couche mince, une fenêtre présentant une transmittance supérieure ou égale à 30% lorsqu'elle est éclairée, à ladite longueur d'onde $\lambda$, par ledit dispositif d'imagerie optique par réflexion.

2. Appareil électrochimique selon la revendication 1 dans lequel ladite couche mince présente une épaisseur inférieure ou égale à 150 nm, de préférence inférieure ou égale à 40 nm et de manière encore préférée inférieure ou égale à 20 nm.

3. Appareil électrochimique selon l'une des revendications précédentes dans lequel ladite paroi forme, avec ladite couche mince, une fenêtre présentant, à ladite longueur d'onde $\lambda$, une transmittance supérieure ou égale à 60% et de manière préférée supérieure ou égale à 80%.

4. Appareil électrochimique selon l'une des revendications précédentes dans lequel ladite couche mince est réalisée en un matériau choisi parmi :

- un métal ;
- un semi-conducteur ;
- le graphène ;
- le diamant dopé bore ;
- une couche de nanoparticules ;
- un oxyde métallique ;
- un polymère conducteur.

5. Appareil électrochimique selon l'une des revendications précédentes dans lequel ladite couche mince est réalisée par implantation dans ladite paroi.

6. Appareil électrochimique selon l'une des revendications précédentes dans lequel au moins la partie de ladite paroi en contact direct avec ladite couche mince est réalisée en matériau conducteur transparent à ladite longueur d'onde $\lambda$.

7. Appareil électrochimique selon l'une des revendications précédentes comprenant une sonde de microscopie à sonde locale (SLC) dont une pointe conductrice constitue ladite deuxième électrode.

8. Appareil électrochimique selon l'une des revendications 1 à 6 dans lequel ladite deuxième électrode présente une surface plane agencée en regard de ladite couche mince parallèlement à cette dernière.

9. Appareil électrochimique selon l'une des revendications précédentes dans lequel ladite paroi portant ladite couche mince est amovible.

10. Appareil électrochimique selon l'une des revendications précédentes comprenant également une troisième électrode (ER), dite de référence, en contact avec ledit volume interne.

11. Appareil électrochimique selon l'une des revendications précédentes dans lequel ledit dispositif d'imagerie optique par réflexion comprend un microscope optique.

12. Appareil électrochimique selon l'une des revendications précédentes comprenant également un microscope à sonde locale (MSL) ayant une sonde locale (SLC), agencée pour balayer ladite couche mince, dont une pointe conductrice forme ladite deuxième électrode.

13. Appareil électrochimique selon l'une des revendications précédentes comprenant également un potentiostat ou ampérostat connecté auxdites électrodes.

14. Appareil électrochimique selon l'une des revendications précédentes dans lequel ledit volume interne contient un fluide au moins partiellement transparent à ladite longueur d'onde $\lambda$, l'épaisseur $e_1$ de ladite couche mince étant comprise entre la moitié et le double d'une épaisseur correspondant à un premier minimum de réflectivité lorsqu'elle est éclairée à ladite longueur d'onde $\lambda$ à travers ladite paroi.

15. Appareil électrochimique selon la revendication 14 dans lequel, en outre, ledit dispositif d'imagerie optique par réflexion est adapté pour éclairer ladite couche mince à au moins une longueur d'onde $\lambda$ minimisant la réflectivité en correspondance dudit premier minimum, avec une tolérance de plus ou moins 10% et de préférence de plus ou moins 5%.

16. Appareil électrochimique selon l'une des revendications précédentes comprenant également un dispositif de projection optique (DPO) agencé pour projeter un motif lumineux sur ladite couche mince à travers ladite paroi.

17. Procédé d'étude in situ d'une réaction électrochimique comprenant les étapes suivantes :

- appliquer une différence de potentiel entre deux électrodes d'un appareil électrochimique selon l'une des revendications précédentes, un fluide susceptible de provoquer une réaction électrochimique étant contenu dans ledit volume interne, moyennant quoi une dite réaction électrochimique se déroule à la surface de ladite première électrode ; et
- éclairer et observer ladite première électrode à travers ladite paroi au moyen dudit dispositif d'imagerie optique.

**18.** Procédé d'impression électrochimique comprenant les étapes suivantes :

- appliquer une différence de potentiel entre ladite première et ladite deuxième électrode d'un appareil électrochimique selon la revendication 16, un fluide susceptible de provoquer une réaction de dépôt photo-électrochimique étant contenu dans ledit volume interne ;
- simultanément, projeter un motif lumineux sur ladite couche mince à travers ladite paroi au moyen dudit dispositif de projection optique moyennant quoi une réaction de dépôt photo-électrochimique se déroule à la surface de ladite première électrode, contrôlée par l'éclairage local de ladite surface par ledit motif lumineux ; et
- observer ladite première électrode à travers ladite paroi au moyen dudit dispositif d'imagerie optique.

**19.** Procédé d'impression électrochimique selon la revendication 18 dans lequel ledit dispositif de projection optique est utilisé pour projeter sur ladite couche mince un motif lumineux correspondant à une première longueur d'onde ou à un premier ensemble de longueurs d'onde et dans lequel ledit dispositif d'imagerie optique est utilisé pour éclairer ladite couche mince à au moins à ladite longueur d'onde λ, différente de ladite première longueur d'onde ou n'appartenant pas audit premier ensemble de longueurs d'onde.

**Patentansprüche**

**1.** Elektrochemisches Gerät, beinhaltend eine fluidische Zelle (CF), welche ein internes Volumen aufweist, das von einem Fluid (EL) gefüllt werden kann, sowie eine erste (CMM) und eine zweite (CE) Elektrode in Kontakt mit dem internen Volumen, wobei mindestens die erste Elektrode eine dünne Schicht aus leitfähigem und bei mindestens einer Wellenlänge λ im sichtbaren Spektrum optisch absorbierendem Material, nahe am Infrarot- oder nahe am Ultraviolettbereich, wobei die dünne Schicht auf oder an einer inneren Fläche einer mindestens teilweise für die Wellenlänge λ transparenten Wand (PT) der fluidischen Zelle angeordnet ist, **dadurch gekennzeichnet, dass** es ebenfalls eine optische Bildgebungsvorrichtung durch Reflexion (MO) beinhaltet, angeordnet, um die dünne Schicht durch die Wand mit mindestens der Wellenlänge λ zu beleuchten, und ebenfalls, um sie durch die Wand zu beobachten; und dadurch, dass die Wand mit der dünnen Schicht ein Fenster bildet, welches eine Durchlässigkeit von größer oder gleich 30 % aufweist, wenn es mit der Wellenlänge λ durch die optische Bildgebungsvorrichtung durch Reflexion beleuchtet wird.

**2.** Elektrochemisches Gerät nach Anspruch 1, bei welchem die dünne Schicht eine Dicke von kleiner oder gleich 150 nm aufweist, vorzugsweise von kleiner oder gleich 40 nm, und noch bevorzugter Weise, von kleiner oder gleich 20 nm.

**3.** Elektrochemisches Gerät nach einem der vorhergehenden Ansprüche, bei welchem die Wand mit der dünnen Schicht ein Fenster bildet, welches bei der Wellenlänge λ eine Durchlässigkeit von größer oder gleich 60 % und vorzugsweise von größer oder gleich 80 % aufweist.

**4.** Elektrochemisches Gerät nach einem der vorhergehenden Ansprüche, bei welchem die dünne Schicht aus einem Material besteht, welches aus folgenden Materialien gewählt wird:

- einem Metall;
- einem Halbleiter;
- Graphen;
- mit Bor dotiertem Diamant;
- einer Nanopartikelschicht;
- einer Metalloxidschicht;
- einem leitfähigen Polymer.

**5.** Elektrochemisches Gerät nach einem der vorhergehenden Ansprüche, bei welchem die dünne Schicht durch Implantation in der Wand geschaffen wird.

**6.** Elektrochemisches Gerät nach einem der vorhergehenden Ansprüche, bei welchem mindestens der Teil der Wand in direktem Kontakt mit der dünnen Schicht aus leitfähigem Material geschaffen ist, welches für die Wellenlänge λ transparent ist.

**7.** Elektrochemisches Gerät nach einem der vorhergehenden Ansprüche, beinhaltend eine Mikroskopiesonde mit lokaler Sonde (SLC), deren leitfähige Spitze die zweite Elektrode bildet.

8.  Elektrochemisches Gerät nach einem der Ansprüche 1 bis 6, bei welchem die zweite Elektrode eine ebene Oberfläche aufweist, welche gegenüber der dünnen Schicht und parallel dazu angeordnet ist.

9.  Elektrochemisches Gerät nach einem der vorhergehenden Ansprüche, bei welchem die Wand, welche die dünne Schicht trägt, abnehmbar ist.

10. Elektrochemisches Gerät nach einem der vorhergehenden Ansprüche, zudem beinhaltend eine dritte Elektrode (ER), genannt Referenzelektrode, in Kontakt mit dem internen Volumen.

11. Elektrochemisches Gerät nach einem der vorhergehenden Ansprüche, bei welchem die optische Bildgebungsvorrichtung durch Reflexion ein optisches Mikroskop beinhaltet.

12. Elektrochemisches Gerät nach einem der vorhergehenden Ansprüche, zudem beinhaltend ein Mikroskop mit lokaler Sonde (MSL), welches eine lokale Sonde (SLC) besitzt, welche angeordnet ist, um die dünne Schicht abzutasten, und die eine leitfähige Spitze besitzt, welche die zweite Elektrode bildet.

13. Elektrochemisches Gerät nach einem der vorhergehenden Ansprüche, zudem beinhaltend ein Potentiostat oder ein Amperostat, welches an die Elektroden angeschlossen ist.

14. Elektrochemisches Gerät nach einem der vorhergehenden Ansprüche, bei welchem das interne Volumen ein Fluid enthält, welches mindestens teilweise für die Wellenlänge $\lambda$ transparent ist, wobei die Dicke $e_1$ der dünnen Schicht zwischen der Hälfte und dem Doppelten einer Dicke beträgt, welche einem ersten Reflektivitätsminimum entspricht, wenn sie mit der Wellenlänge $\lambda$ durch die Wand beleuchtet wird.

15. Elektrochemisches Gerät nach Anspruch 14, bei welchem zudem die Bildgebungsvorrichtung durch Reflexion geeignet ist, um die dünne Schicht mit mindestens einer Wellenlänge $\lambda$ zu beleuchten, welche die Reflektivität in Entsprechung mit dem ersten Minimum minimiert, mit einer Toleranz von plus oder minus 10 % und vorzugsweise von plus oder minus 5 %.

16. Elektrochemisches Gerät nach einem der vorhergehenden Ansprüche, zudem beinhaltend eine optische Projektionsvorrichtung (DPO), angeordnet zum Projizieren eines Lichtmotivs durch die Wand auf den dünnen Film.

17. In situ-Untersuchungsverfahren einer elektrochemischen Reaktion, folgende Schritte beinhaltend:

    - Anwenden einer Potenzialdifferenz zwischen zwei Elektroden eines elektrochemischen Gerätes nach einem der vorhergehenden Ansprüche, wobei in dem internen Volumen ein Fluid enthalten ist, welches geartet ist, eine elektrochemische Reaktion hervorzurufen, wodurch eine solche elektrochemische Reaktion an der Oberfläche der ersten Elektrode stattfindet; und
    - Beleuchten und Beobachten der ersten Elektrode durch die Wand mit Hilfe der optischen Bildgebungsvorrichtung.

18. Elektrochemisches Druckverfahren, folgende Schritte beinhaltend:

    - Anwenden einer Potenzialdifferenz zwischen der ersten und der zweiten Elektrode eines elektrochemischen Gerätes nach Anspruch 16, wobei ein Fluid, welches geartet ist, eine photoelektrochemische Ablagerungsreaktion hervorzurufen, in dem internen Volumen enthalten ist;
    - gleichzeitig, Projizieren eines Lichtmotivs durch die Wand auf den dünnen Film mit Hilfe der optischen Projektionsvorrichtung, wodurch eine photoelektrochemische Ablagerungsreaktion an der Oberfläche der ersten Elektrode stattfindet, gesteuert durch die lokale Beleuchtung der Oberfläche durch das Lichtmotiv; und
    - Beobachten der ersten Elektrode durch die Wand mit Hilfe der optischen Bildgebungsvorrichtung.

19. Elektrochemisches Druckverfahren nach Anspruch 18, bei welchem die optische Projektionsvorrichtung verwendet wird, um ein Lichtmotiv auf die dünne Schicht zu projizieren, welches einer ersten Wellenlänge oder einer ersten Gruppe von Wellenlängen entspricht und bei welchem die optische Bildgebungsvorrichtung verwendet wird, um die dünne Schicht mit mindestens der Wellenlänge $\lambda$ zu beleuchten, welche sich von der ersten Wellenlänge unterscheidet oder nicht Bestandteil der ersten Gruppe von Wellenlängen ist.

**Claims**

1. An electrochemical device comprising a fluidic cell (CF) having an internal volume able to be filled with a fluid (EL) and at least one first (CMM) and one second (CE) electrode making contact with said internal volume, wherein at least said first electrode comprises a thin layer made of a conductive material that is optically absorbent at at least one wavelength $\lambda$ in the visible, near-infrared or near-ultraviolet spectrum, said thin layer being arranged on or in an internal surface of a wall (PT) of said fluidic cell which is at least partially transparent to said wavelength $\lambda$, **characterized in that** it also comprises an optical device for imaging in reflection (MO) arranged for illuminating said thin layer through said wall at at least said wavelength $\lambda$ and to also observe it through said wall; and **in that** said wall forms, with said thin layer, a window having, when lit by the optical device for imaging in reflection at said wavelength $\lambda$, a transmittance higher than or equal to 30%.

2. The electrochemical device as claimed in claim 1, wherein said thin layer has a thickness smaller than or equal to 150 nm, preferably smaller than or equal to 40 nm and more preferably smaller than or equal to 20 nm.

3. The electrochemical device as claimed in one of the preceding claims, wherein said wall forms, with said thin layer, a window having, at said wavelength $\lambda$, a transmittance higher than or equal to 60% and preferably higher than or equal to 80%.

4. The electrochemical device as claimed in one of the preceding claims, wherein said thin layer is produced from a material chosen from:

    - a metal;
    - a semiconductor;
    - graphene;
    - boron-doped diamond;
    - a layer of nanoparticles;
    - a metal oxide;
    - a conductive polymer.

5. The electrochemical device as claimed in one of the preceding claims, wherein said thin layer is produced by implantation in said wall.

6. The electrochemical device as claimed in one of the preceding claims, wherein at least the portion of said wall making direct contact with said thin layer is produced from a conductive material that is transparent at said wavelength $\lambda$.

7. The electrochemical device as claimed in one of the preceding claims, comprising a scanning probe microscopy (SLC) probe a conductive tip of which constitutes said second electrode.

8. The electrochemical device as claimed in one of claims 1 to 6, wherein said second electrode has a planar surface arranged facing said thin layer parallel to the latter.

9. The electrochemical device as claimed in one of the preceding claims, wherein said wall bearing said thin layer is removable.

10. The electrochemical device as claimed in one of the preceding claims, also comprising a third electrode (ER) that is what is called a reference electrode, making contact with said internal volume.

11. The electrochemical apparatus as claimed in one of the preceding claims, wherein said optical device for imaging in reflection comprises an optical microscope.

12. The electrochemical apparatus as claimed in one of the preceding claims, also comprising a scanning probe microscope (MSL) having a scanning probe (SLC) arranged to scan said thin layer, a conductive tip of which forms said second electrode.

13. The electrochemical apparatus as claimed in one of the preceding claims, also comprising a potentiostat or galvanostat connected to said electrodes.

**14.** The electrochemical apparatus as claimed in one of the preceding claims, wherein said internal volume contains a fluid that is at least partially transparent at said wavelength $\lambda$, the thickness $e_1$ of said thin layer being comprised between half and twice a thickness corresponding to a first reflectivity minimum when said layer is illuminated at said wavelength $\lambda$ through said wall.

**15.** The electrochemical apparatus as claimed in claim 14, wherein, furthermore, said optical device for imaging in reflection is suitable for illuminating said thin layer at at least one wavelength $\lambda$ minimizing reflectivity in correspondence with said first minimum, with a tolerance of plus or minus 10% and preferably of plus or minus 5%.

**16.** The electrochemical apparatus as claimed in one of the preceding claims, also comprising an optical projecting device (DPO) arranged to project a light pattern onto said thin layer through said wall.

**17.** A method for studying an electrochemical reaction *in situ*, comprising the following steps:

- applying a potential difference between two electrodes of an electrochemical apparatus as claimed in one of the preceding claims, a fluid capable of initiating an electrochemical reaction being contained in said internal volume, and thereby causing a said electrochemical reaction to occur on the surface of said first electrode; and
- illuminating and observing said first electrode through said wall by means of said optical imaging device.

**18.** An electrochemical printing process comprising the following steps:

- applying a potential difference between said first and said second electrode of an electrochemical apparatus as claimed in claim 16, a fluid capable of initiating a photo-electrochemical deposition reaction being contained in said internal volume;
- simultaneously, projecting a light pattern onto said thin layer through said wall by means of said optical projecting device and thereby causing a photo-electrochemical deposition reaction to occur on the surface of said first electrode, which reaction is controlled by the local illumination of said surface by said light pattern; and
- observing said first electrode through said wall by means of said optical imaging device.

**19.** The electrochemical printing process as claimed in claim 18, wherein said optical projecting device is used to project onto said thin layer a light pattern corresponding to a first wavelength or to a first set of wavelengths and wherein said optical imaging device is used to illuminate said thin layer at at least said wavelength $\lambda$, which wavelength is different from said first wavelength or does not belong to said first set of wavelengths.

FIG.1

FIG.3A

FIG.3B

FIG.2B

EP 3 108 038 B1

FIG.2A

16

## RÉFÉRENCES CITÉES DANS LA DESCRIPTION

**Documents brevets cités dans la description**

- WO 2009037311 A

- US 5216542 A

**Littérature non-brevet citée dans la description**

- **H. CACHET et al.** In situ Investigation of Crystallization Processes by Coupling of Electrochemical and Optical Measurements : Application to CaCO3 Deposit. *Electrochemical and Solid-State Letters,* 01 Janvier 2001, vol. 4
- **M. NOBIAL et al.** In situ Investigation of Crystallization Processes of ZnO by Coupling of Electrochemical and Optical Measurements. *Proceedings of the International Workshop « Advances Techniques for Energy Sources Investigation and Testing »,* 01 Janvier 2004
- Simultaneous EIS and in situ microscope observation of a partially blocked electrode. Application to scale electrodeposition. **O. DEVOS et al.** Electrochimica Acta. Elsevier, 20 Janvier 2006, vol. 51

- **S. G. MOISEEV ; S. V. VINOGRADOV.** Design of Antireflection Composite Coating Based on Metal Nanoparticle. *Physics of Wave Phenomena,* 2011, vol. 10 (1), 47-51
- **M. A. KATS et al.** Nanometre optical coatings based on strong interference effects in higly absorbing média. *Nature Materials,* Janvier 2013, vol. 12, 20-24
- **R. M. A. AZZAM et al.** Antieflection of an absorbing substrate by an absorbing thin film at normal incidence. *Applied Optics,* 1987, vol. 26 (4), 719-722